# EUROPEAN PATENT APPLICATION

(11) **EP 4 691 801 A1**
(43) Date of publication of application: **11.02.2026**
(21) Application number: 25190402.5
(22) Date of filing: 18.07.2025
(51) Int. Cl.: B60C 11/24, B60C 19/00, G06K 19/077, H01Q 1/22, B60C 23/04

(54) **TIRE WITH TREADWEAR MONITORING**

(30) Priority: 09.08.2024 US 202463681225 P; 17.06.2025 US 202519240728
(71) Applicant: The Goodyear Tire & Rubber Company, Akron, OH 44316 (US)
(72) Inventor: ORLEWSKI, Piotr, 9021 Ettelbruck (LU)
(74) Representative: Kutsch, Bernd

(57) **Abstract**

A tire (1000) is disclosed comprising: a circumferential tread portion (10) comprising one or more of tread blocks and tread ribs (12, 13); an electromagnetic identification tag (20) embedded in one of the tread blocks and the tread ribs; an inner surface radially below the tread portion (10); and an electromagnetic identification tag reader (30) provided at the inner surface and being adapted to wirelessly read the electromagnetic identification tag (20). The electromagnetic identification tag (20) is preferably a NFC tag (20) and the electromagnetic identification tag reader (30) is preferably a NFC tag reader (30). Also disclosed is a tire treadwear monitoring system.

## Description

### Field of the Invention

The present invention is directed to a tire including a tread portion comprising an electromagnetic identification tag, such as an NFC tag, and an electromagnetic identification tag reader. Furthermore, the present invention is directed to a tire treadwear monitoring system comprising a tire with an electromagnetic identification tag, and an electromagnetic identification tag reader.

### Background of the Invention

Over the past years, various systems have been suggested to monitor tire treadwear, particularly during tire use. However, in many cases, such systems are expensive and/or have substantial weight and size, which makes it difficult to include those into tires. Despite recent developments in the field of monitoring tire treadwear, significant room for improvement remains.

### Summary of the Invention

The invention relates to a tire in accordance with claim 1 or 13, respectively, and to a system in accordance with claim 15.

Dependent claims refer to preferred embodiments of the invention.

In a first aspect of the present invention, the invention is directed to a tire comprising a circumferential tread portion including one or more of tread blocks and tread ribs. Furthermore, the tire comprises an electromagnetic identification tag embedded in one of the tread blocks and the tread ribs, and an inner surface radially below the tread portion. Moreover, the tire comprises an electromagnetic identification tag reader provided at the inner surface and being adapted to wirelessly read the electromagnetic identification tag.

In a second aspect of the present invention, the invention is directed to a tire comprising a circumferential tread portion, an NFC tag embedded in the circumferential tread portion, and an NFC tag reader provided radially below the tread portion and adapted to wirelessly read the NFC tag.

In a third aspect of the present invention, the invention is directed to a tire treadwear monitoring system, comprising a tire including i) a tread portion comprising one or more of tread blocks and tread ribs and ii) an inner surface at least partially enclosing a tire cavity. Moreover, the treadwear monitoring system comprises an electromagnetic identification tag comprising an electromagnetic identification tag antenna and being embedded in one of the tread blocks and tread ribs, as well as an electromagnetic identification tag reader extending into the tire cavity and comprising an electromagnetic identification tag reader antenna. Still in accordance with the third aspect, the tag antenna and the tag reader antenna are essentially parallelly oriented, and the tag antenna and the tag reader antenna include in a direction perpendicular to a radial direction of the tire a distance from each other of at most 2 cm.

### Brief Description of the Drawings

The invention will be described by way of example and with reference to the accompanying drawings in which:
FIG. 1 is a schematic cut view of a pneumatic tire according to an embodiment of the present invention, the tire comprising an NFC tag and corresponding tag reader provided radially below the tread and extending into a tire cavity;
FIG. 2 is a schematic cut view of a pneumatic tire according to another embodiment of the invention, the tire comprising an NFC tag and a tag reader attached to an inner surface of the tire radially below the tread via a container carrying the tag reader and a sensor assembly;
FIG. 3 is a scheme of a tag reader such as the tag reader already shown in the embodiment of Figure 1;
FIG. 4 is a schematic cut view of a tire according to yet another embodiment of the present invention, wherein a tag reader is provided in a sensor assembly housing attached via a container to an inner surface of the tire radially below the tread and extending into the tire cavity;
FIG. 5 is a scheme of a sensor assembly and/or sensor assembly housing comprising a tag reader, such as the sensor assembly according to Figure 4;
FIG. 6 is a schematic cut view of a tire according to still another embodiment of the present invention, wherein the tread portion comprises multiple tags along an axial direction of the tire as well as corresponding tag readers provided radially below each tag;
FIG. 7 is a schematic cut view of a tire according to still another embodiment of the present invention, wherein multiple sacrificial tags are stacked radially above one another in an axial center portion of the tread portion, and wherein a tag reader is attached to a radially inner surface of the tire facing the tire cavity; and
FIG. 8 is a schematic flow chart showing a method of monitoring tire treadwear with an NFC tag and an NFC tag reader, in accordance with a preferred embodiment of the present invention.

### Detailed Description of Preferred Embodiments of the Invention

According to the first aspect, the invention is directed to a tire comprising a circumferential tread portion including one or more of tread blocks and tread ribs (such as circumferential tread ribs). Furthermore, the tire comprises an electromagnetic identification tag embedded in one of the tread blocks and the tread ribs, and an inner (or radially inner) surface radially below the tread portion. Moreover, the tire comprises an electromagnetic identification tag reader provided at the inner surface and being adapted to wirelessly read the electromagnetic identification tag.

As the electromagnetic identification tag is provided in one of the tread blocks and tread ribs of the tread portion (such as radially between a bottom of an adjacent tread groove of the tread portion and a radially outermost surface of the tread), the tag is sacrificed when treadwear reaches a radial height at which the tag is embedded in said one of the tread blocks and tread ribs. Once such a sacrificial tag is damaged or lost, the tag reader cannot read the tag anymore, which is an indication for a status of treadwear corresponding to the original radial position or radial embedment height of the tag. Furthermore, the tag reader, being provided at the inner surface of the tire, and preferably being attached to the inner surface of the tire, allows to reliably and/or efficiently read the tag. In contrast, remote tag reading over larger distances and through potential signal shielding obstacles, such as from a central vehicle communication system, is not necessary. Moreover, the attachment of the tag reader to the tire provides a fixed relative positioning of the tag and the tag reader.

In one embodiment, the tag comprises a tag antenna and the tag reader comprises a tag reader antenna, wherein the tag reader is optionally attached to the inner surface so that the tag antenna and the tag reader antenna are essentially parallelly oriented. Essentially parallelly oriented shall include a deviation by angles of at most 10°, optionally of at most 5°, from a parallel orientation. Such an orientation provides improved signal transmission between tag and tag reader.

In another embodiment, the tag antenna and/or the tag reader antenna is a coil antenna, e.g., extending in a plane, or in other words, a planar coil antenna. Optionally, said coil antenna is provided on a flat and/or flexible sheet, such as printed on said sheet. Such a design is particularly beneficial for an improved transmission, as well as compact and cost-efficient.

In still another embodiment, the tag antenna and the tag reader antenna are provided radially above each other, preferably so as to overlap in a direction perpendicular to the radial direction, and/or in an axial direction and in a circumferential direction of the tire. Such an arrangement further improves signal transmission and/or allows usage of smaller antennas or lower signal transmission energy. Reliability of signal transmission can be further improved.

In still another embodiment, the tag antenna and the tag reader antenna include a distance of at most 20 mm, preferably of at most 10 mm, from each other, measured perpendicular to a radial direction of the tire. In other words, a lateral distance or displacement is preferably limited accordingly. This distance is measured between two closest points of the tag antenna and the tag reader antenna, or the shortest distance between both antennas, perpendicular to a radial direction of the tire. In case of an overlap (e.g., partial or full overlap) of both antennas perpendicular to the radial direction of the tire, such a distance can be considered to be zero.

In still another embodiment the electromagnetic identification tag is an NFC (near field communication) identification tag, or in other words, an NFC tag. The terms NFC tag and NFC identification tag are used interchangeably herein. Typically, NFC tags include a communication frequency of 13.56 MHz. Optionally, the NFC identification tag is an electromagnetic identification tag including a communication frequency of 13.56 MHz.

In still another embodiment, a radial distance between the tag and the tag reader is less than 10 cm, preferably less than 9 cm, more preferably less than 5 cm, or even more preferably less than 4 cm, or most preferably less than 3 cm. Usually, such relatively small distances are not achievable with external tag readers permanently mounted to a vehicle well and/or vehicle chassis, such as to monitor tire treadwear when the tire is mounted to the vehicle and/or during driving. Potential monitoring with a portable tag reading device is typically not possible when driving. Moreover, reading tags embedded in a tread portion with a portable reading device would require identification of the position of the tag. Furthermore, the tag of a parked vehicle could be facing the road surface impairing reading the tag with a portable tag reader.

In still another embodiment, the tag is one or more of a passive NFC tag, and a tag including a communication frequency within a range of 11 MHz to 15 MHz, preferably within a range of 13 MHz to 14 MHz, or 13.56 MHz. NFC tags, particularly passive NFC tags, can be provided with a very small size, particularly thickness, and/or are cost-effective and easy to be integrated into a tire tread, such as between two radially adjacent circumferential tread layers, e.g., tread cap-layers.

In still another embodiment the NFC tag is an active tag. NFC tags, including NFC passive tags and NFC active tags, are commercially available as such.

In still another embodiment, the tire is one of a pneumatic tire and a non-pneumatic tire, and/or the tread portion preferably comprises one or more elastomer compositions, such as rubber compositions.

In still another embodiment, the electromagnetic identification tag is a radio frequency identification tag, such as including communication frequencies within a range of 1 kHz to 300 GHz, e.g., preferably from 100 kHz to 10 GHz.

In still another embodiment, the tire is a pneumatic tire (e.g., a radial pneumatic tire, and/or a pneumatic passenger car tire or pneumatic truck tire) comprising an innerliner including the inner surface at least partially enclosing a tire cavity, and wherein the electromagnetic identification tag reader is optionally attached to the innerliner and extends into the tire cavity. For instance, the tag reader can be attached to the inner surface after tire cure. In another option, the tire may be a sulfur-cured tire. Provision of the tag reader at the inner surface of the tire helps also to ensure a fixed appropriate relative positioning of tag and tag reader. For instance, if a tag reader is fixed to a rim to which a tire is mounted, relative positioning of the tag provided in a tread portion of the tire and the tag reader mounted to the rim may be more difficult.

In still another embodiment, the electromagnetic identification tag reader is attached to the radially inner surface of the innerliner radially below the tread and/or axially between two axially opposite shoulder portions of the tread. In addition, or alternatively, the tag comprises a tag antenna and the tag reader comprises a tag reader antenna, wherein the tag reader is optionally attached to the inner surface so that the tag antenna and the tag reader antenna are essentially parallelly oriented. In addition, or alternatively, the tag antenna and the tag reader antenna are provided radially above each other to overlap in axial and circumferential directions.

In still another embodiment, an equatorial plane of the tire extends through one or more of i) the electromagnetic identification tag reader, and ii) the electromagnetic identification tag. Thus, the tag reader and/or the tag are relatively centrally provided with respect to the axial direction of the tire, which, on the one hand, helps to provide a well-balanced tire, and, on the other hand, helps to detect treadwear in an axial center portion of the tire, where typically also one or more physical treadwear indicators are provided and/or required.

In still another embodiment, the tread portion includes tread grooves (e.g., separating the tread blocks or the tread ribs) and the tag reader is embedded at a radial height radially above a bottom of an adjacent tread groove (such as of an adjacent circumferential tread groove, and/or a tread groove including a physical treadwear indicator extending from the bottom of the tread groove in a radially outer direction).

In still another embodiment, at least one tread groove of the tread portion comprises a (physical) treadwear indicator (usually consisting of one or more elastomer compositions, specifically rubber compositions), which i) extends in a radially outer direction from a (radially innermost) bottom of the tread groove, and/or ii) includes a radially outermost treadwear indicator surface at a radial height h. Preferably, the tag is positioned at a radial height within a range of h - 1 mm to h + 2 mm, preferably of h to h + 2 mm, or h to h + 1 mm. The radial height h is measured along a radial direction from an axis of rotation of the tire into a radially outer direction, or equivalent. Thus, the tag is damaged or lost before the tread portion (or, particularly, the respective tread block or rib) reaches the bottom of the groove, so that the tread portion is typically still in a condition to drive appropriately on the road.

In still another embodiment, the tread portion comprises one or more elastomer compositions and the tag is fully enclosed by the one or more elastomer compositions. Having the tag full enclosed in the one or more elastomer compositions, helps to protect the tag against environmental influences such as corrosion caused by water and salt, or mechanical damages, such as caused by stones, which might impair proper function of the tag.

In still another embodiment, the tag is provided in the form of a sheet extending essentially perpendicularly to the radial direction. This arrangement helps to obtain a better-defined sacrificial wear or loss of the tag. Providing the tag in the form of a sheet does not require that the sheet includes a smooth surface. For instance, the tag and/or sheet may carry an antenna extending in parallel to the sheet (such as a coil antenna or planar coil antenna) and/or one or more electronic components, such as one or more chips, e.g., including one or more of a transponder chip, a memory chip, and a radio chip.

In still another embodiment, the tag includes one or more of a radial thickness within a range of 0.05 mm to 2 mm (preferably of 0.05 mm to 1 mm), an axial extension within a range of 3 mm to 50 mm (preferably, of 3 mm to 30 mm); a circumferential extension within a range of 3 mm to 50 mm (preferably, of 3 mm to 30 mm); an aspect ratio of its radial thickness to its circumferential extension within a range of 0.01 to 0.5 (preferably, of 0.01 to 0.25), and one of a flat shape, a planar shape, and a sheet shape, e.g., extending essentially perpendicularly to the radial direction of the tire.

In still another embodiment, the tire comprises a transmitter (such as comprised in a sensor assembly of the tire, and/or comprised in the tag reader) adapted to wirelessly transmit information from the tag reader, such as to a remote receiver. A transceiver can also be considered as a transmitter or comprising a transmitter herein.

In still another embodiment, the pneumatic tire comprises a sensor assembly comprising one or more sensors, including at least a tire (inflation) pressure sensor, and a transmitter, wherein the sensor assembly is adapted to wirelessly transmit one or more of tire pressure information from the pressure sensor, and information from the tag reader, via its transmitter. For instance, the tag reader and the tire sensor assembly can comprise and/or share one transmitter. Optionally, the sensor assembly comprises the tag reader. Such an arrangement can allow the tag reader to use one or more components of the sensor assembly. Optionally, the sensor assembly is also adapted to transmit information from further sensors of the sensor assembly.

In still another embodiment, the sensor assembly comprises a housing at least partially enclosing the tire pressure sensor (and optionally one or more further sensors) and the tag reader. Thus, tag reader and tire pressure sensor may share a single housing, thereby, e.g., simplifying attachment to the tire. For instance, the housing may be attached to the radially inner surface of the innerliner by one or more of an adhesive, adhesive tape, curing, co-curing, mechanical interlocking (such as by hook-and-loop connection), and other suitable attachment techniques.

In still another embodiment, the sensor assembly comprises a housing and the tag reader is provided within the housing.

In still another embodiment, the sensor assembly comprises a housing, wherein the tag reader is provided adjacent the housing and/or the sensor assembly, preferably radially above the sensor assembly and/or the housing.

In still another embodiment, the sensor assembly, and optionally its housing, further comprises one or more of: one or more further sensors (e.g., including one or more of: one or more acceleration sensors, a temperature sensor, an optical sensor, an acoustic sensor), a power source (e.g., a battery), a processing unit, a data storage, a wireless signal receiver, a further transmitter, a transceiver, a memory, and a transducer. In an option, the sensor assembly comprises the tag reader. In another option, the tag reader uses one or more of the power source, the processing unit, the data storage, and the memory of the sensor assembly. In other words, the sensor assembly shares one or more of the power source, the processing unit, the data storage, and the memory with the tag reader. The tag reader as such may optionally be devoid of one or more of a power source, a processing unit and a data storage. In other words, the tag reader may be supplied with power by the power source of the sensor assembly. The tag reader may be controlled by the processing unit of the sensor assembly, and/or information from the tag reader may be processed by the processing unit of the sensor assembly. The tag reader may store received information in the data storage and/or memory of the sensor assembly. In addition, or alternatively, information read by the tag reader can optionally be processed by the processing unit of the sensor assembly to obtain processed tag reader information. In addition, or alternatively, the sensor assembly is adapted to wirelessly transmit information read by the tag reader (optionally comprising processed tag reader information) via its transmitter, such as to a remote receiver.

In still another embodiment, the tag reader is configured to send a tag reading request to the tag and receive a response from the tag. For instance, the tag may comprise a transponder.

In still another embodiment, the tag reader and/or the sensor assembly is configured to wirelessly transmit information indicating a non-reply of the tag (e.g., upon sending a tag reading request by the tag reader to the tag), in case the tag does not respond to the tag reading request, to a receiver, such as a remote receiver, via the transmitter.

In still another embodiment, a remote receiver includes one or more of a data cloud, a mobile device (such as a laptop, cell phone, or tablet), a computer, a vehicle communication system, a driver, and a fleet manager. Optionally, transmitting information from the tag reader and/or the transmitter of the sensor assembly may be carried out by one or more of radio frequency transmission, Bluetooth^{®}, WAN, Wifi, GSM, and other suitable techniques.

In still another embodiment, the tread portion comprises one or more of tread blocks and tread ribs, wherein the tag is provided within one of the tread blocks and/or tread ribs.

In still another embodiment, two or more electromagnetic identification tags are embedded in the one or more of tread blocks and tread ribs, preferably at different radial heights, e.g., radially above one another, so as to be (successively) sacrificed upon wear of the one or more of tread blocks and tread ribs. Such an arrangement helps to provide information about the radial wear status of the tread, and/or the blocks and/or ribs, particularly taking into account that the two or more tags have been embedded at known radial heights. In case a tag reader does not receive communications from one of the tags anymore, particularly from a radially outermost tag, this indicates that treadwear has reached the radial height at which the respective tag was embedded.

In still another embodiment, three or more electromagnetic identification tags are embedded in the tread portion, wherein a first tag of the tags is provided in a (tread block or tread rib of a) first circumferential shoulder portion of the tread portion, a second tag of the tags is provided in a (tread block or tread rib of a) second circumferential shoulder portion of the tread portion, which is axially opposite to the first shoulder portion, and a third tag of the tags is provided (in a tread block or tread rib) axially between the shoulder portions. Such an arrangement helps to monitor treadwear uniformity transversely to an equatorial plane of the tire.

In still another embodiment, the tag can be mentioned as sacrificial electromagnetic identification tag, and/or as electromagnetic identification tag which is one of damaged and lost upon treadwear of the tire, and/or which sacrificially wears upon wear of the one of the tread blocks and the tread ribs, such as caused by driving on a road.

In still another embodiment, the tag reader is configured to periodically read the tag with intervals between 10 minutes and 10 days. In particular, in this embodiment, it is not necessary to read the tag continuously with very short intervals.

In still another embodiment, the electromagnetic identification tag and/or the tag reader comprises a radio chip and a (for instance flexible) sheet carrying the radio chip and an antenna.

In still another embodiment, the tag reader and/or the sensor assembly is configured to estimate treadwear based on the information received by the tag reader, such as based on a non-reply by the tag upon sending a tag reading request, e.g., by using a processing unit of the tag reader and/or the sensor assembly. Optionally, information indicating estimated treadwear is transmitted via the transmitter of the tag reader and/or the sensor assembly.

In still another embodiment, the tire comprises a sensor system comprising one or more of: the sensor assembly; a container holding one or more of the sensor assembly and the tag reader; and the tag reader.

In still another embodiment, the container is made of a polymer composition, preferably an elastomer composition, or even more preferably, a rubber composition. The container may include a, preferably flat, base portion attachable to the innerliner of the tire, such as by one or more of adhesives, adhesive tape, co-curing, curing (such as sulfur curing), and hook-and-loop connection. The container preferably includes a sensor assembly and/or tag reader holding portion. The holding portion includes preferably one or more of a hollow shape, such as a hollow essentially frustoconical shape or essentially hollow cylindrical shape, forming a hollow space for receiving one or more of the sensor assembly and the tag reader. Optionally, the tag reader and/or the sensor assembly are resiliently and/or removably held in the holding portion of the container. This allows removal of the tag reader and/or the sensor assembly when the tire is damaged or worn. Thus, the sensor assembly and/or the tag reader may be used again in another tire and/or may be recycled. The container may include an opening (for inserting the sensor assembly and/or tag reader into the hollow space) which faces the tire cavity such as in a radially inner direction. Optionally, the tag reader is a part of the sensor assembly, e.g. provided within a housing of the sensor assembly. In another option, the tag reader is provided radially above the sensor assembly, optionally within the sensor assembly housing. In still another option, the tag reader is provided in the holding portion of the container at a radially outer position, e.g. radially above the sensor assembly housing. Such a radial arrangement helps to obtain a reliable signal transmission between the tag and the tag reader without potential disturbances by the sensor assembly.

In still another embodiment, the sensor assembly housing is formed by one or more polymer compositions, such as one or more thermoplastic polymer compositions. While metal is also possible, it is typically less preferred, for instance, as it might impair signal transmission.

In still another embodiment, the tread portion, e.g., particularly the tread block or tread rib in which the tag is embedded, is devoid of electric components radially above and/or radially below the tag. In addition, or alternatively, the tread portion, e.g., the tread block or tread rib in which the tag is embedded, does not comprise any electronic or electric components (apart from the tag), such as sensors, antennas, capacitors, chips.

According to the second aspect, the tire comprises a circumferential tread portion (preferably comprising one or more of tread blocks and tread ribs), an NFC (near field communication) tag embedded in the circumferential tread portion (preferably in a tread block or tread rib of the tread portion), and an NFC tag reader provided radially below the tread portion and adapted to wirelessly read the at least one NFC tag.

NFC tags as such are commercially available at relatively low costs. Moreover, the provision of the NFC tag reader radially below the tread portion for reading the NFC tag, provides a defined and reliable relative arrangement of tag and tag reader in the rotatable tire. Upon wear of the NFC tag in the tread portion, the tag reader cannot read the tag anymore, indicating wear of the tread down to the radial embedding position of the NFC tag.

In one embodiment, the tire is a pneumatic tire, further comprising a sensor assembly attached to an innerliner of the tire radially below the NFC tag, wherein the sensor assembly comprises a tire pressure sensor, a transmitter, and the NFC tag reader, wherein the sensor assembly is preferably adapted to wirelessly transmit information from the tag reader, such as to a remote receiver.

In another embodiment, the sensor assembly comprises a sensor assembly housing comprising the tire pressure sensor, the transmitter, and the NFC tag reader.

It is emphasized that one or more embodiments and/or features of the first aspect can also be embodiments and/or features of the second aspect. Merely for the sake of conciseness, those are not literally reiterated here.

In a third aspect, the present invention is directed to a tire treadwear monitoring system comprising a tire (or, alternatively, directed to a tire) including a tread portion comprising one or more of tread blocks and tread ribs, and an electromagnetic identification tag comprising a tag antenna and being embedded in one of the tread blocks and tread ribs. Furthermore, the tire comprises an inner surface (such as being formed by an innerliner of the tire) at least partially enclosing a tire cavity, and an electromagnetic identification tag reader extending into the tire cavity (e.g., attached to and/or extending from one of the inner surface, a rim, and a valve stem), wherein the tag reader comprises a tag reader antenna, and wherein the tag reader antenna and the tag antenna are oriented essentially in parallel to each other and/or include a (lateral) distance of at most 2 cm (preferably of at most 1 cm) from each other, measured in a direction perpendicular to a radial direction of the tire.

As already mentioned herein above, an essentially parallel orientation shall include deviations by angles of at most 10°, optionally of at most 5°. Such an orientation provides improved signal transmission between tag and tag reader.

In one embodiment, one of, or preferably both of, the tag antenna and the tag reader antenna are coil antennas, preferably planar coil antennas. In such an embodiment, both planes of the coil antennas are essentially in parallel to one another.

In another embodiment, the tag antenna extends in a direction essentially perpendicular to the radial direction of the tire. In case the tag antenna is a planar coil antenna, said antenna (or, its antenna plane) extends preferably also essentially perpendicularly to the radial direction.

In still another embodiment, the tag antenna and the tag reader antenna overlap with each other in the direction perpendicular to the radial direction of the tire, and/or in one or both of an axial direction of the tire and a circumferential direction of the tire.

In another embodiment, a radial distance between the tag reader antenna and the tag antenna is at most 10 cm, preferably at most 9 cm, more preferably at most 6 cm, or even more preferably at most 4 cm. In particular, said distance of at most 2 cm from each other in a direction perpendicular to the radial direction, or even a partial or full overlap of the tag antenna and the tag reader antenna in the direction perpendicular to the radial direction, still allows a radial distance between the tag reader antenna and the tag antenna. Typically, such a radial distance is larger than 1 cm, e.g., as the tag reader and its tag reader antenna are provided radially below a belt portion of the tire, and/or within the tire cavity.

In still another embodiment, the electromagnetic identification tag is an NFC identification tag, and/or adapted to communicate at frequencies already mentioned herein above. Preferably, the electromagnetic identification tag reader is an NFC identification tag reader, and/or adapted to communicate at said frequencies.

In still another embodiment, the tire treadwear monitoring system (and/or the tire) comprises a sensor assembly comprising at least one sensor (such as one or more sensors as mentioned herein above) and a sensor assembly housing, wherein the sensor assembly comprises the tag reader, optionally, provided at least partially in said sensor assembly housing. The sensor assembly preferably comprises a tire pressure sensor.

In still another embodiment, the sensor assembly further comprises one or more of a power source (such as a battery), a processing unit, and a transmitter (such as for wirelessly transmitting tag and/or sensor information, e.g., to a remote receiver), and wherein the sensor assembly and/or the tag reader are optionally adapted such that the tag reader (and, optionally, also the at least one sensor) is one or more of powered by the power source, adapted to be controlled by the processing unit, and adapted to transmit tag reader information (and optionally also sensor information) via the transmitter. Tag reader information and/or sensor information may comprise processed information, such as processed by the processing unit.

In still another embodiment, the tag reader and/or a sensor assembly comprising the tag reader is mounted to one or more of a rim to which the tire is mounted, and a valve stem extending into the tire cavity. Such a mounting position of the tag reader may in some cases ease mounting of the tire to the rim and/or may allow to detect tire changes on a rim which can help in tire management and logistics such as in vehicle fleets. In particular, the tag reader may detect a replacement of a first identification tag by another, second identification tag, optionally resulting in the conclusion that the first identification tag was not damaged or lost but replaced by another tag, e.g., embedded in another tire. Optionally, the rim and/or the valve stem are comprised in the tire treadwear monitoring system.

Further optional features and/or embodiments are those already mentioned herein above in relation to the first and second aspects.

In a fourth aspect, the present invention is directed to a tire comprising a tread portion, an electromagnetic identification tag provided in the tread portion (such as in one or more of tread blocks and tread ribs of the tread portion), a sensor assembly comprising a sensor assembly housing comprising one or more sensors, such as a tire pressure sensor, and an electromagnetic identification tag reader.

Thus, a tag reader is included or integrated in the sensor housing of the sensor assembly. Further optional features and/or embodiments are those already mentioned herein above in relation to the first to third aspects.

In a fifth aspect, the present invention is directed to a method of monitoring treadwear of a tire, such as of the tire in accordance with one or more of the aforementioned aspects and optionally one or more of their embodiments, or such as using the previously mentioned treadwear monitoring system or one or more of its embodiments, wherein the method comprises one or more steps of:
Providing a tire, preferably a pneumatic tire, comprising a circumferential tread portion with an embedded electromagnetic identification tag, preferably an NFC tag, wherein the tag is embedded radially above a treadwear indicator provided in a groove of the tread and/or in one of a tread block and a tread rib of the tread portion;
Providing a sensor system including i) a sensor assembly comprising one or more sensors selected from a tire pressure sensor, a temperature sensor, an acceleration sensor, a strain sensor, an optical sensor, an acoustic sensor (preferably, at least a pressure sensor), and ii) a tag reader (preferably an NFC tag reader), at least partially extending into a tire cavity;
Obtaining tire sensor information with the one or more sensors and tag information with the tag reader;
Wirelessly transmitting tire sensor information and/or tag information, preferably to a remote receiver, optionally via a transmitter of the sensor assembly, wherein said information is optionally processed by a processing unit of the sensor assembly; and
Wirelessly transmitting information, such as an alert and/or information indicating an absence and/or non-reply of the tag, e.g., in case the tag reader does not receive a response from the tag upon sending a tag reading request, to a remote receiver.

Thus, the method provides an efficient and/or cost-effective way to monitor tire treadwear.

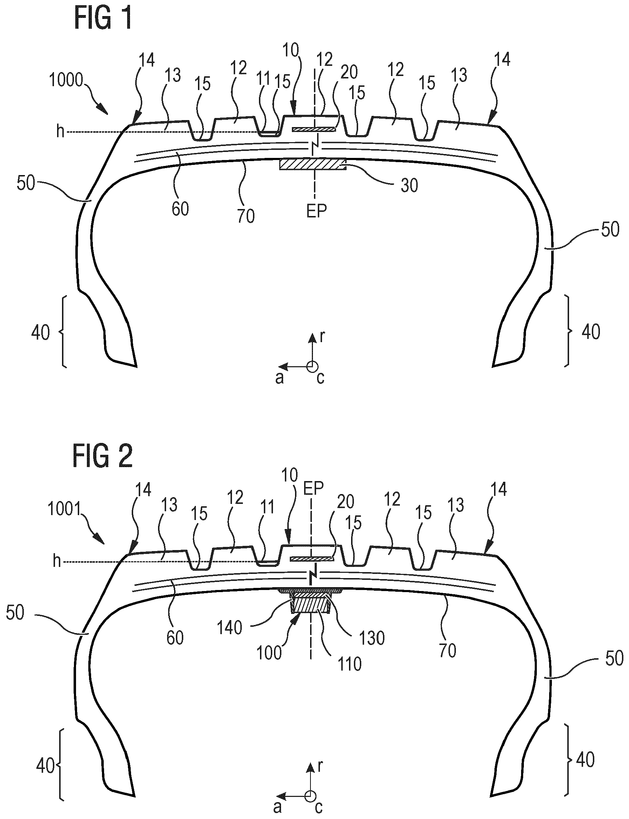

Figure 1 shows a schematic partial cut view of a pneumatic tire 1000 in a plane perpendicular to the equatorial plane EP of the tire 1000, wherein the tire 1000 comprises a circumferential tread portion 10, a pair of axially opposite circumferential bead portions 40, a pair of circumferential sidewalls 50 extending on each lateral side of the tire between respective axially outer portions of the tread portion 10 and a respective bead portion 40. The tread portion 10 comprises two axially outer and/or opposite circumferential shoulder portions 14 and a plurality of circumferential tread grooves 15 provided between circumferentially extending tread ribs 12, 13 (or, e.g., rows of tread blocks). In the present embodiment, the tread portion 10 comprises two axially outer or outermost shoulder ribs 14 and three center portion ribs 12, which extend along the circumferential direction c in a center portion of the tread portion 10 provided axially between both circumferential shoulder portions 14. At least one of said tread grooves 15 comprises a treadwear indicator 11, which extends in a radially outer direction from the bottom of the respective tread groove 15 up to the height h (such as measured from an axis of rotation of the tire, not explicitly shown herein as such, or from the radially innermost bottom of the groove 15).

For the sake of better comprehensibility, the circumferential direction c, the radial direction r, and the axial direction a, as well as the equatorial plane of the tire EP, are indicated in multiple Figures herein, where appropriate. The axial direction a is parallel to an axis of rotation of the tire, the circumferential direction c is parallel to the circumference of the tire and the radial direction r is perpendicular to the axial direction a and the circumferential direction c. It is emphasized that each of these directions can have different orientations so that mentioning one of these directions is not necessarily limited to a specific orientation, unless indicated otherwise herein.

In accordance with the present embodiment of Figure 1, the tread portion 10 further comprises an NFC identification tag 20 which is fully embedded in a rubber composition of a center tread rib 12 of the tread portion 10. Furthermore, the tire 1000 comprises a tag reader 30, particularly an NFC identification tag reader, which is provided radially below the NFC tag 20. The tag reader 30 is attached to a radially inner surface of the tire 1000, particularly a radially inner surface of the innerliner 70 of the tire 1000, facing a tire cavity of the tire 1000. As shown, preferably both, the tag 20 and the tag reader 30, are crossed by the (virtual) equatorial plane EP of the tire 1000. Furthermore, the tag reader 30 and the tag 20 preferably extend essentially in parallel to each other and are arranged radially above each other which helps to significantly improve wireless communication between the tag 20 and the tag reader 30. In particular, a tag antenna of the tag 20 and a tag reader antenna of the tag reader 30 (not explicitly depicted in Figure 1) are preferably arranged in parallel, thereby supporting a good signal transmission between tag 20 and tag reader 30, although wireless communication and/or signal transmission is carried out through rubber material present between the tag 20 and the tag reader 30 and through a belt portion 60 of the tire 1000, which circumferentially extends between the tread portion 10 and the innerliner 70. Typically, a belt portion 60 includes multiple belt layers comprising metal cords, such as steel cords. The inventors have discovered that signal transmission through such a belt portion 60 is nevertheless good using electromagnetic identification tags 20 in the tread portion 10 and the tag reader 30 radially below on the innerliner 70. In particular, the use of NFC identification tags has turned out to be particularly desirable as those are very cost effective and their communication signal, typically at 13.56 MHz, propagates very well through the steel cord reinforced belt portion 60.

Still with reference to Figure 1, the NFC identification tag 20 is provided at a radial height 0.5 mm above the height h corresponding to a radially outermost edge of the treadwear indicator 11. Thus, based on such a tag 20 fully embedded in the tread portion 10 and the associated tag reader 30, the tire 1000 can detect when treadwear has almost reached the radial height h of the treadwear indicator 11. For passenger cars, such a physical treadwear indicator is typically extending in a radially outer direction by 1.6 mm from a bottom of a groove. In particular, treadwear or abrasion of the tread portion 10 will sooner or later result in damaging the tag 20 or the loss of the tag 20 so that the tag read 30 cannot detect and/or read the tag 20 anymore. In one embodiment, the NFC identification tag 20 is a passive tag which is considered to be most cost efficient. Typically, the tag reader 30 will periodically send a read and/or response request to the tag 20, wherein the tag 20 will reply to the request (e.g., using a transponder comprised in the tag), such as by one or more of indicating its presence and sending identification information, such as including a unique tag identifier. Such tag information may also comprise further information such as information on the tag mounting position, tire type, tire size, maximum tire load, etc. Optionally, the tag reader 30 will send information, such as an alert to a (remote) receiver, upon a non-reply of the tag 20 despite a request was sent to the tag 20 by the tag reader 30.

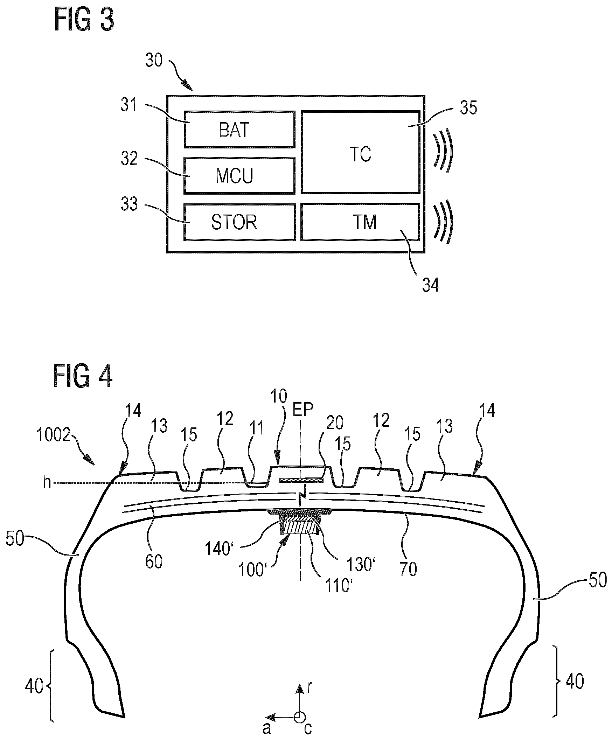

Figure 3 shows a schematic embodiment of components of the tag reader 30. The tag reader 30 comprises a transceiver 35 (TC), which is adapted to send information to the tag and/or receive information from the tag. Typically, the transceiver 35 comprises and antenna, such as a planar loop antenna, e.g., a printed planar loop antenna which preferably extends essentially in a plane perpendicular to the equatorial plane of the tire, or, in other words in parallel to the circumferential and axial direction and/or perpendicular to the radial direction, when being mounted in the tire cavity. Furthermore, the tag reader 30 typically comprises a microcontroller 32 (MCU) or a processor unit, as well as a data storage 33 (STOR), e.g., for storing and/or comprising identification information about the tag and/or the tire to which the tag is mounted. In an alternative embodiment, a memory or the storage can be integrated in the microcontroller. In addition, the tag reader 30 comprises a battery 31 (BAT) as power source for the components of the tag reader 30. Alternatively, or in addition, the tag reader could comprise an energy harvesting device as power source for supply of the components of the tag reader 30. Furthermore, the tag reader 30 comprises a transmitter 34 (TM) for sending information to a remote receiver such as a mobile device or a communication system of a vehicle. In particular, the transmitter 34 can be adapted to wirelessly transmit information received from the tag such as including information stored on the tag. In addition, the tag reader 30 is adapted to inform a remote receiver via its transmitter 34 in case a tag does not reply or does not reply anymore (or cannot be read anymore), so as to provide information indicative of the treadwear status. While the tag reader 30 is shown with the transceiver 35 and the transmitter 34, it is also possible that the tag reader 30 comprises only one transmitter and a receiver, or transceiver. However, preferably, wireless communication between the tag and the tag reader 30 is an electromagnetic communication including a frequency within a range of 10 MHz to 15 MHz, particularly of 13.56 MHz. Preferably, the communication frequency of the transmitter (for sending information to a remote receiver) is within a (radio) frequency range of 400 MHz to 500 MHz, e.g. at 433 MHz, or within a (radio) frequency range of 1 GHz to 10 GHz, such as 2.4 GHz, e.g. via Bluetooth^{®}. Another option is a frequency range between 800 MHz and 1000 MHz, such as via Sigfox^{™} transmission. Such different frequency ranges may result in a preferred use of two transmitting and/or receiving devices in the tag reader 30.

Figure 2 discloses another partial schematic cut view of a tire 1001, similar to tire 1000 of Figure 1, whereas the tire 1001 of Figure 2 comprises a sensor system 100 comprising a sensor assembly 110, a tag reader 130, and a container 140 attached to an innerliner 70 of the tire 1001 radially below the tag 20. For the sake of better comprehensibility, Figure 2 uses the same reference signs as Figure 1, where appropriate. Thus, the tire 1001, comprises a pair of bead portions 40, a pair of sidewalls 50, a tread portion 10, a belt portion 60, an inner liner 70 facing and/or at least partially enclosing a tire cavity, tread shoulder portions 14, tread grooves 15, a treadwear indicator 11 (including a radially outermost surface at the height h), tread ribs 12, 13 (including tread shoulder ribs 13, and tread center portion ribs 12), as well as the electromagnetic identification tag 20 (which is in the present embodiment an NFC identification tag).

The sensor system 100 is intersected by the equatorial plane EP which helps to provide a well-balanced tire 1001. The tag reader 130 can be geometrically and/or technically the same as, or similar to, the tag reader 30 of the previously mentioned embodiment. In the embodiment of Figure 2, the tag reader 130 is attached to the innerliner 70 via the container 140. For instance, the container 140 may comprise a polymer composition, such as an elastomer composition, particularly a rubber composition. The container 140 may be attached to the tire by one or more of adhesives, co-curing, or curing. Preferably, the sensor container 140 is attached to the tire 1001 after tire-cure, or in other words post-cure. The sensor container 140 includes a flat base portion contacting the innerliner 70 and a holding portion which receives and holds the tag reader 130 and the sensor assembly 110. For instance, the tag reader 130 and/or the sensor assembly 110 are resiliently held in the holding portion of the sensor container 140, and/or are held via one or more of press-fit, friction, mechanical interlocking, and adhesives. In the present embodiment, the tag reader 130 is provided radially above the sensor assembly 110 so as to be radially closer to the tag 20 than the sensor assembly 110. The sensor assembly 110 comprises a sensor assembly housing comprising at least one sensor, preferably a tire pressure sensor, and optionally, one or more further sensors selected from one or more of at least one acceleration sensor, a temperature sensor, an optical sensor, an acoustic sensor. Furthermore, the sensor assembly 110 comprises a battery, a processor, a data storage, a wireless signal receiver, a further transmitter, a transceiver, a memory, and a transducer. The sensor assembly 110, is preferably adapted to send information comprising sensor information obtained by one or more sensors of the sensor assembly 110 (such as including tire pressure information) to a remote receiver (not explicitly shown). In an option, only one of the tag reader 130 and the sensor assembly 110 comprises a transceiver and/or a transmitter for sending information, including tire sensor or sensor assembly information and tag reader or tag information to a remote receiver. In the present embodiment, both, the tag reader 130 and the sensor assembly 110, are provided radially below the tag 20 which is advantageous for tag reading and for the weight distribution of the tire 1001. Moreover, the tag reader 130 can be easily mounted to the tire 1001 together with the sensor assembly 110 and/or the housing of the sensor assembly 110, e.g., including the tire pressure sensor, by the common container 140.

Figure 4 shows another schematic partial cut view of a tire 1002, which is similar to the embodiment already shown in Figure 2, but essentially differs in that the tire 1002 according to Figure 4 comprises a sensor system 100' comprising a container 140' resiliently holding a sensor assembly 110' which includes in its housing an (integrated) tag reader 130'. The remaining reference signs correspond to those already utilized in Figures 1 and 2. It is still preferred that at least an antenna of the integrated tag reader 130' is provided in a radially outer portion of the sensor assembly 110' or in other words of the sensor assembly housing so as to allow a particularly reliable communication between the tag 20 and the tag reader 130'. Optionally, the sensor assembly 110' may comprise one or more printed circuit boards comprising one or more sensors and/or components of the tag reader 130'. According to the embodiment of Figure 4, the tag reader 130' can be easily attached to the radially inner surface of the tire 1002 via the sensor assembly container 140'. Optionally, the sensor assembly 110', or the sensor assembly housing respectively, is resiliently held in the container 140' and can be removed from the container 140', such as for usage in another tire, e.g., in case the tire 1002 is worn or damaged. As in the previous embodiments, the communication between the tag 20 and the tag reader 130' is based on NF communication, which has turned out to be a very reliable and cost-efficient communication type despite the partially electromagnetically shielding belt portion 60.

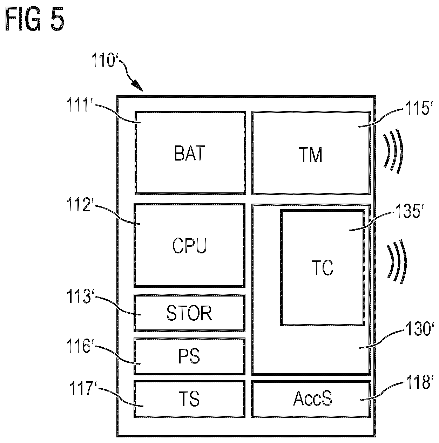

Figure 5 shows a more detailed schematic view of the sensor assembly 110' such as present in the embodiment of Figure 4. In particular, the housing of the sensor assembly 110' comprises a power source in the form of a battery 111' (BAT), a processing unit 112' (CPU), a data storage 113' (STOR), a transmitter 115' (TM), the tag reader 130' comprising a transceiver 135' (TC), a pressure sensor 116' (PS), a temperature sensor 117' (TS), as well as a multi-axis acceleration sensor 118' (AccS). In particular, the housing of the sensor assembly 110' also comprises the tag reader 130'. In contrast to the tag reader 130 shown in Figure 2, the sensor assembly 110' shares multiple electrical/electronic components with the tag reader 130'. In particular, the tag reader 130' is powered by the shared battery 111' and may be controlled by the processing unit 112' of the sensor assembly 110'. The processing unit 112' is also configured to process data received by the tag reader 130' via the transceiver 135'. In order to communicate with remote receivers, the sensor assembly 110' comprises the transmitter 115' which is in other words shared with the tag reader 130' which does not have its own transmitter for sending information/data to remote receivers. Thus, in practice, a relatively large battery of the sensor assembly, a relatively fast processing unit, and a relatively large transmitter of the sensor assembly can be used compared with typical tag reader power sources, transmitters, and/or processing units.

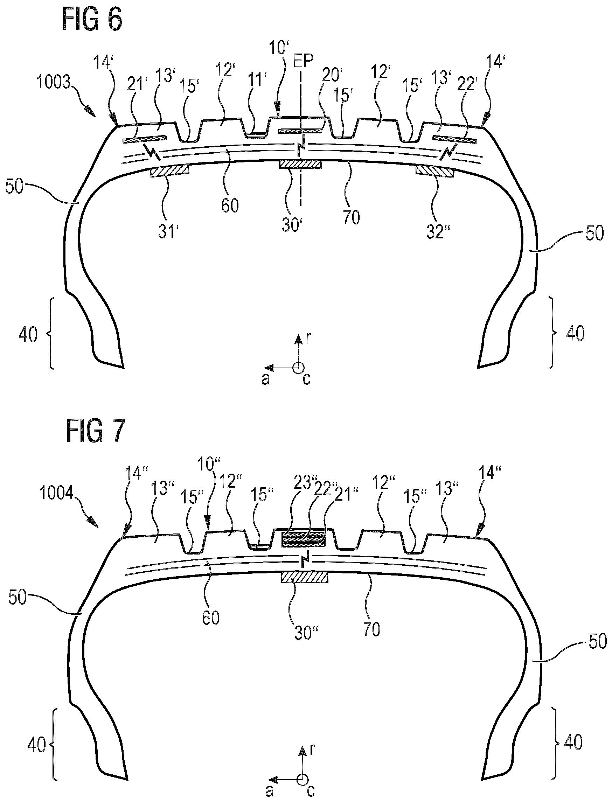

Figure 6 shows yet another embodiment of the present invention as a schematic partial cut view of a pneumatic tire 1003 comprising again a pair of bead portions 40, a pair of sidewalls 50, and a tread portion 10' including circumferential shoulder portions 14', circumferential shoulder ribs 13', circumferential grooves 15', circumferential center ribs 12', and a treadwear indicator 11'. Moreover, the tire 1003 includes an innerliner 70 at least partially enclosing a tire cavity, wherein a belt portion 60 is arranged radially between the innerliner 70 and the tread portion 10' in a crown region of the tire 1003. In the present embodiment, the tire 1003 comprises multiple electromagnetic identification tags in the form of NFC identification tags 20', 21', 22' as well as multiple electromagnetic identification tag readers 30', 31', 32' associated with respective tags 20', 21', 22'. In particular, each tag 20', 21', 22' includes a respective tag reader 30', 31', 32' attached radially below the tag 20', 21', 22' to the innerliner 70 of the tire 1003. As visible, the tag readers 31', 32' only partially overlap in an axial direction with the respective radially outer tags 21', 22'. However, preferably antennas in each of the tags 21', 22' and the corresponding tag readers 31', 32' are essentially extending in parallel to each other. Optionally, each tag reader 30', 31', 32' may include electrical and/or electronic components as the tag 30 already shown in Figure 3.

The axial distribution of multiple, in this case three, NFC identification tags helps to detect uneven tire treadwear. In particular, in case the tire 1003 abrades faster at one of the two shoulder portions 14' or ribs 13', this can be detected by an earlier damage or loss of the respective tag 21' or 22', while the center tag 20' may still be communicating with and/or replying to its tag reader 30'. The construction and/or function of the single tags 20', 21', 22' and their associated tag readers 30', 31' 33' can, e.g., be as described above in relation to Figures 1 and 3.

Optionally, one or more of the tag readers 30', 31', 32' are removably attached to the tire 1003, such as by adhesive tape and/or hook-and-loop connection, so that the tag readers 30', 31', 32' can be used again in another tire in case the tire 1003 is worn / damaged, or be easily recycled.

Figure 7 shows still another embodiment of a tire 1004 in a schematic partial cut view, wherein the tire 1004 comprises again a pair of bead portions 40, a pair of sidewalls 50, a belt portion 60, an innerliner 70, and a tread portion 10" comprising two shoulder portions 14", shoulder ribs 13", center ribs 12", and tread grooves 15'. A tag reader 30" (which can, e.g., be the same or a similar tag reader as shown already in Figure 3) is arranged at a radially inner side/surface of the tire 1004 radially below the tread portion 10" on the innerliner 70 and facing the tire cavity. In the present embodiment, multiple NFC tags 21", 22", 23" are provided radially on top of each other and radially spaced apart from each other. These tags 21", 22", 23" are all fully embedded in rubber composition material of the tread 10". For instance, one or more of the tags 21", 22", 23" could be provided between two radially neighboring tread cap layers (not explicitly illustrated in Figure 7) of the tread portion 10". Such a provision allows easy mounting of the tags 21", 22", 23" during tire building. The tag reader 30" is provided radially below all tags 21", 22", 23" which allows good signal transmission. Typically, each tag 21", 22", 23" includes a different identification, or in other words a unique identifier, whereas all tags may be operating at the same (NFC) transmission frequency. If one of the tags is lost or damaged (usually, the radially outermost tag first) the tag reader 30" may note that the tag 23" does not respond and/or transmit information to the tag reader 30" anymore, thereby indicating a corresponding radial treadwear of the tread portion 10". Then, optionally, as in other embodiments, the tag reader 30" may send information and/or an alert to a remote receiver, indicating a current treadwear status and/or treadwear status change.

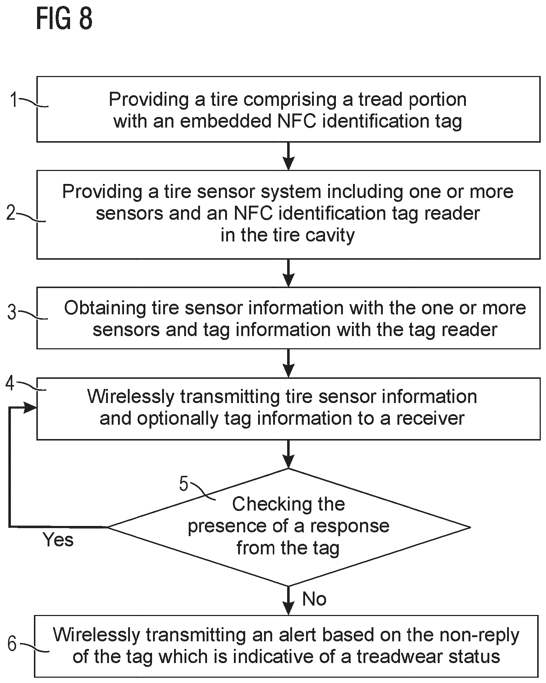

Figure 8 schematically shows a flowchart of preferred method steps in accordance with an embodiment of the present invention, particularly of a method of monitoring tire treadwear. In a first step 1, the method comprises the step of providing a tire comprising a tread portion with an embedded NFC identification tag. In a further, second step 2, the method comprises the step of providing a tire sensor system including one or more sensors (such as including a tire pressure sensor) and an NFC identification tag reader in the tire cavity (e.g., on an inner surface of the tire's innerliner, such as radially below the tread). Thus, the NFC tag can be reliably read by the NFC tag reader. In a third step 3, the method comprises the step of obtaining tire sensor information with the one or more sensors and tag information with the tag reader. In a fourth step 4, the method comprises the step of wirelessly transmitting tire sensor information and optionally tag information to a (remote) receiver. While it may be desirable to submit at least one time tag identification information to the receiver, this is not mandatory. In particular, for the purpose of monitoring treadwear and/or tire sensor information (such as tire pressure), transmission of tag information to a remote receiver is not necessary. In another step, i.e., step number 5, the method comprises the step of checking the presence of a response from the tag. In case a response or transmission from the tag is received upon a tag reading request by the tag reader, method step 4 may be carried out again. In case no response or transmission from the tag is received, according to step 6, the method involves wirelessly transmitting an alert (or a notification) based on the non-reply of the tag, which is indicative of a treadwear status (i.e., a current treadwear status of the tread portion of the tire).

It is emphasized that multiple embodiments of an aspect and/or features thereof can be combined with one another. Moreover, embodiments and/or features of one aspect can be embodiments and/or features of another aspect of the invention. Merely for the sake of conciseness such combinations have not been reiterated herein.

## Claims

1. A tire comprising: a circumferential tread portion (10) comprising one or more of tread blocks and tread ribs (12, 13); an electromagnetic identification tag (20) embedded in one of the tread blocks and the tread ribs; an inner surface radially below the tread portion (10); and an electromagnetic identification tag reader (30) provided at the inner surface and being adapted to wirelessly read the electromagnetic identification tag (20).

2. The tire according to claim 1, wherein the tag (20) comprises a tag antenna and the tag reader (30) comprises a tag reader antenna, and wherein the tag reader (30) is attached to the inner surface so that the tag antenna and the tag reader antenna are essentially parallelly oriented, and, optionally, wherein the tag antenna and the tag reader antenna are provided radially above each other so as to overlap in a direction perpendicular to the radial direction.

3. The tire according to claim 1, wherein the electromagnetic identification tag (20) is an NFC tag or a passive NFC tag and/or wherein the electromagnetic identification tag (20) has or includes a communication frequency within a range of from 11 MHz to 15 MHz.

4. The tire according to at least one of the previous claims, wherein the tire (1000) is a pneumatic tire comprising an innerliner (70) including the inner surface at least partially enclosing a tire cavity, and wherein the electromagnetic identification tag reader (30) is attached to the innerliner (70) and extends into the tire cavity.

5. The tire according to at least one of the previous claims, wherein the tag reader (30) is attached to the innerliner (70) of the tire (1000) radially below the tread (10) and axially between two axially opposite circumferential shoulder portions (14) of the tread (10), wherein the tag (20) comprises a tag antenna and the tag reader (30) comprises a tag reader antenna, wherein the tag reader (30) is attached to the inner surface so that the tag antenna and the tag reader antenna are essentially parallelly oriented, and wherein the tag antenna and the tag reader antenna are provided radially above each other and overlap in axial and circumferential directions.

6. The tire according to at least one of the previous claims, wherein an equatorial plane of the tire (1000) extends through one or more of i) the electromagnetic identification tag (20) reader, and ii) the electromagnetic identification tag (30).

7. The tire according to at least one of the previous claims, wherein the tread portion (10) comprises at least one tread groove (15) including a bottom and comprising a treadwear indicator (11) which i) extends in a radially outer direction from the bottom of the tread groove (15), and ii) includes a radially outermost treadwear indicator surface at a radial height h, and wherein the tag (20) is positioned at a radial height within a range of h - 1 mm to h + 2 mm.

8. The tire according to at least one of the previous claims, wherein the tread portion (10) comprises one or more elastomer compositions and the tag (20) is fully enclosed by the one or more elastomer compositions; and/or wherein the tire (1000) comprises a transmitter (115') adapted to wirelessly transmit information from the tag reader (30).

9. The tire according to at least one of the previous claims, wherein the tag (20) includes one or more or any combination of:
a radial thickness within a range of 0.05 mm to 2 mm;
an axial extension within a range of 3 mm to 50 mm;
a circumferential extension within a range of 3 mm to 50 mm;
an aspect ratio of its radial thickness to its circumferential extension within a range of 0.01 to 0.5; and
a flat shape extending essentially perpendicularly to the radial direction.

10. The tire according to at least one of the previous claims, wherein the pneumatic tire (1000) further comprises a sensor assembly (110) comprising at least a tire pressure sensor (116') and a transmitter (115'), wherein the sensor assembly (110) is adapted to wirelessly transmit information from the tag reader (30) via the transmitter (115').

11. The tire according to claim 10, wherein the sensor assembly (110) further comprises one or more of: a sensor assembly housing (140) at least partially enclosing the tire pressure sensor (116') and the tag reader (30); one or more further sensors (118'); a power source (111'); a processing unit (112'); a data storage (113'); a wireless signal receiver; a memory; a transceiver; and a transducer.

12. The tire according to at least one of the previous claims, wherein:
(i) two or more electromagnetic identification tags (20) are embedded in the one or more of the tread blocks and the tread ribs (12, 13) at different radial heights so as to be successively sacrificed upon wear of the one or more of tread blocks and tread ribs (12, 13); and/or
(ii) wherein the tire (1000) comprises three or more electromagnetic identification tags (20) embedded in the tread portion, wherein a first tag of the tags (20) is provided in a first shoulder portion (14) of tread portion (10), a second tag of the tags (20) is provided in a second shoulder portion (14) of the tread portion (10), which is axially opposite to the first shoulder portion, and a third tag of the tags (20) is provided axially between the first shoulder portion and the second shoulder portion.

13. A tire comprising a circumferential tread portion (10), an NFC tag (20) embedded in the circumferential tread portion (10) and an NFC tag reader (30) provided radially below the tread portion (10) and adapted to wirelessly read the NFC tag (20).

14. The tire according to claim 13, wherein the tire (1000) is a pneumatic tire, wherein the tire (1000) further comprises: an innerliner (70) at least partially enclosing a tire cavity; and a sensor assembly (110) attached to the innerliner (70) radially below the NFC tag (20), wherein the sensor assembly (110) comprises a tire pressure sensor (116'), a transmitter, and the NFC tag reader (30), and wherein the sensor assembly (110) is adapted to wirelessly transmit information from the tire pressure sensor (116') and from the tag reader (30) via the transmitter.

15. A tire treadwear monitoring system comprising:
a tire (1000) including i) a tread portion (10) comprising one or more of tread blocks and tread ribs (12, 13), and ii) an inner surface at least partially enclosing a tire cavity;
an electromagnetic identification tag (20), preferably a NFC tag, comprising an electromagnetic identification tag antenna and being embedded in one of the tread blocks and tread ribs (12, 13); and
an electromagnetic identification tag reader (30) extending into the tire cavity and comprising an electromagnetic identification tag reader antenna,
wherein the tag antenna and the tag reader antenna are parallely or essentially parallelly oriented, and
wherein the tag antenna and the tag reader antenna include in a direction perpendicular to a radial direction of the tire a distance from each other of at most 2 cm, and, optionally, a radial distance between the tag antenna and the tag reader antenna is at most 10 cm.
